# FASCICULE DE BREVET EUROPEEN

(11) **EP 1 317 114 B1**
(45) Date de publication et mention de la délivrance du brevet: **27.02.2013**
(21) Numéro de dépôt: 02292776.8
(22) Date de dépôt: 07.11.2002
(51) Int. Cl.: H04L 12/24, H04L 12/26

(54) **Procédé de determination de tendance de service**
Verfahren zur Ermittlung die Entwicklungstendenz von ein Dienst
Method for determining the tendency of a service

(30) Priorité: 03.12.2001 FR 0115584
(43) Date de publication de la demande: 04.06.2003
(73) Titulaire: Alcatel Lucent, 75007 Paris (FR)
(72) Inventeur: Marilly, Emmanuel, 92160 Antony (FR); Betge-Brezetz, Stéphane, 75015 Paris (FR); Martinot, Olivier, 91210 Draveil (FR)
(74) Mandataire: Sciaux, Edmond

(56) Documents cités:
- WO-A-01/80492
- VOLOCHINE T ET AL: "NETWORK MANAGEMENT AND TRAFFIC ANALYSIS FOR CICNET" IEEE NETWORK, IEEE INC. NEW YORK, US, vol. 5, no. 5, 1 septembre 1991 (1991-09-01), pages 41-50, XP000248472 ISSN: 0890-8044

## Description

L'invention porte sur les procédés de surveillance de réseaux, et plus particulièrement sur les procédés de détermination de tendance de service sur un réseau de télécommunication.

Un logiciel commercialisé par la société bmc software sous la référence « Patrol DashBoard » met en oeuvre un procédé de surveillance de réseau. Ce procédé mesure la bande passante d'un réseau à différents instants et détermine une tendance de la bande passante en fonction de la mesure.

Il est aussi connu de la demande de brevet WO 01/80492 une technique de surveillance d'un indicateur de qualité de service, dans un réseau de télécommunication. Toutefois, la surveillance se base sur un indicateur subjectif et nullement sur un calcul de tendance. Il n'est par conséquent pas possible de connaître l'évolution dans le temps de l'indicateur surveillé.

Dans l'article "Network Management and Traffic Analysis for CICNET", T. Volochine décrit un module de prévision de tendance pour le development de traffic total d'un réseau.

Dans le cadre d'accords sur un niveau de service, aussi appelés SLA, passés entre un prestataire réseau et un utilisateur, le prestataire s'engage à fournir un service réseau avec un niveau de défaillance donné. Le service réseau peut par exemple consister en un transfert de sons ou d'images en temps réel. Il n'existe actuellement pas d'outils qui permette de prévoir précisément la défaillance d'un service réseau.

Il existe donc un besoin pour un procédé qui résolve ce problème.

L'invention propose ainsi un procédé de détermination de tendance d'un service de réseau de communication, comprenant les étapes de :
- sélection d'au moins deux paramètres d'un réseau, représentatifs d'un service réseau et variables dans le temps ;
- mesure et/ou calcul à au moins deux instants des valeurs des paramètres réseau;
- détermination à au moins deux instants de la valeur d'un indicateur de service en fonction desdites valeurs mesurées et/ou calculées des paramètres;
- détermination d'une tendance de l'indicateur en fonction desdites valeurs d'indicateur déterminées.

Selon une variante, le procédé comprend en outre une étape ultérieure de détermination en fonction de la tendance de l'indicateur d'un instant de franchissement par l'indicateur de service d'un seuil défini.

Selon une autre variante, le service réseau est choisi dans le groupe constitué de la voix, du vidéophone, de la téléphonie, du multimédia, de la vidéo sur demande, du réseau privé virtuel, des données en temps réel, des données interactives et des flux de données.

Selon encore une variante, le procédé comprend en outre une étape de détermination d'un plan comme indicateur en effectuant une régression linéaire sur les paramètres réseau mesurés et/ou calculés.

Selon encore une autre variante, la détermination de la tendance du service comprend la comparaison de valeurs des paramètres à des seuils prédéterminés.

On peut encore prévoir que la détermination de tendance du service comprend en outre la détermination de tendance d'un paramètre réseau, la comparaison de la tendance du paramètre à un seuil prédéterminé.

Selon une variante, la détermination de tendance de l'indicateur est réalisée par un réseau neuronal.

Selon encore une variante, le procédé comprend en outre une étape d'apprentissage dans laquelle le réseau neuronal détermine des règles d'association entre une tendance de service et des valeurs de paramètres de service.

Selon une autre variante, l'étape d'apprentissage comprend l'insertion dans le réseau neuronal d'une base d'apprentissage présentant des valeurs de tendance de services associées à des valeurs de paramètres de service.

Selon encore une autre variante, le réseau neuronal est un réseau multi-couches.

On peut encore prévoir que le procédé comprend en outre une étape de calcul d'une espérance mathématique de perte financière en fonction de la tendance de service réseau déterminée.

Selon une variante, le procédé comprend en outre une étape de détermination d'une capacité à un instant donné à fournir un service réseau.

L'invention a aussi pour objet un système de gestion (ou de surveillance) de réseau et/ou de services, mettant en oeuvre un tel procédé.

Ainsi, l'invention permet d'obtenir une tendance de l'indicateur mesuré, a contrario, par exemple, de la demande de brevet WO 01/80492 précédemment décrite. Cette tendance peut permettre de savoir si l'indicateur est susceptible de franchir un seuil défini, voire de déterminer quand ce seuil sera franchi. Selon une mise en oeuvre de l'invention, il est aussi possible de déterminer un critère de fiabilité sur l'estimation de l'instant de franchissement du seuil.

D'autres caractéristiques et avantages de l'invention apparaîtront à la lecture de la description qui suit de modes de réalisation de l'invention donnée à titre d'exemple et en référence aux dessins qui montrent :
- figure 1, un algorithme d'un exemple simplifié de détermination de tendance de service réseau selon l'invention ;
- figure 2, un premier mode de réalisation d'une détermination de tendance de service réseau ;
- figure 3, un algorithme simplifié d'un deuxième mode de réalisation de l'invention ;
- figure 4, un schéma d'un réseau neuronal utilisé dans un troisième mode de réalisation de l'invention.

L'invention propose un procédé de détermination de tendance d'un service. On sélectionne pour cela plusieurs paramètres réseau représentatifs d'un service, puis on détermine une tendance du service réseau en fonction de ces paramètres.

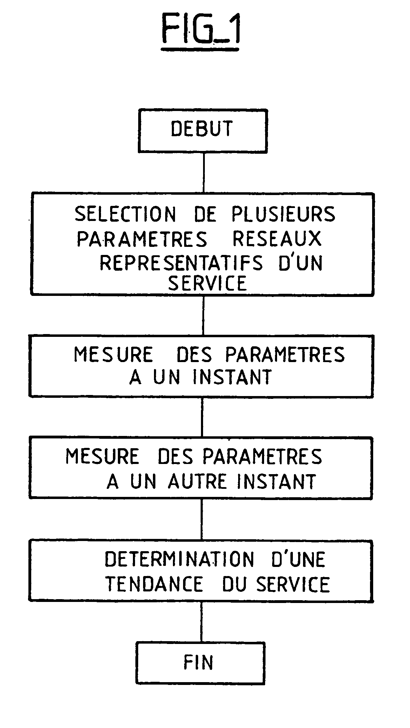

La figure 1 présente un algorithme simplifié d'un exemple de procédé de détermination de tendance d'un service sur un réseau de communication selon l'invention. Lors d'une première étape, on sélectionne plusieurs paramètres de transmission sur un réseau, représentatifs d'un service réseau. Lors d'une deuxième étape, on mesure ou on calcule les valeurs des paramètres sélectionnés à un instant. Lors d'une troisième étape, on mesure ou on calcule les valeurs des paramètres à un autre instant. Lors d'une quatrième étape, on détermine une tendance du service à ce dernier instant à partir des paramètres mesurés. On va décrire ultérieurement plusieurs types de paramètres mesurés en fonction de différents services réseaux. On va également décrire des exemples de détermination de tendance.

On peut définir un indicateur de niveau de service à partir des données mesurées et/ou calculées. La valeur de cet indicateur à différents instants peut être utilisée pour déterminer la tendance du service. On peut également utiliser une ou plusieurs tendances extrapolées de mesures d'un paramètre dans la définition de l'indicateur. L'indicateur à un instant donné peut également être défini par les valeurs de différents paramètres à des instants différents.

On peut ainsi identifier un certain nombre de paramètres du réseau aussi appelés SLS (service level specifications) que l'on va observer préférentiellement pour déterminer le niveau de service. Parmi ces paramètres, on distingue en particulier les pertes de paquets, les retards entre paquets, la gigue ou stabilité, la bande passante, la stabilité de la bande passante ou encore la directionnalité de la communication. On peut ainsi utiliser des paramètres calculés ou extrapolés des mesures. On peut par exemple calculer des évolutions de stabilité de bande passante, que l'on utilise dans la détermination de l'indicateur de service réseau. De tels paramètres permettent par exemple de déterminer la fiabilité du service réseau. On peut également utiliser des paramètres extrapolés, par exemple des tendances des paramètres identifiés précédemment.

Le niveau de service peut concerner tout type de service réseau. On peut cependant mettre en avant les services suivants : le transfert de voix, la téléphonie, le vidéophone, le transfert de multimédia, la vidéo sur commande, l'application tableau blanc (nommée white board en anglais), le réseau privé virtuel, le transfert de données en temps réel ou le transfert de données interactives. Ces services peuvent en particulier être mis en oeuvre pour des services de transmission au protocole IP.

On peut sélectionner plusieurs paramètres de réseau pour définir le niveau de service en fonction du service ou groupe de services à considérer. Les paramètres peuvent être pondérés en fonction de leur importance pour un niveau de service donné. La pondération donne une importance prépondérante aux paramètres les plus sensibles dans la détermination de la tendance d'un service réseau donné. Le tableau suivant donne un exemple d'association et de pondération entre un service réseau et des paramètres de réseau.

| | **Perte de paquets** | **Retard** | **Gigue** | **Bande passante** | **Directionnalité** |
|---|---|---|---|---|---|
| **Voix** | 1 | 3 | 3 | 2 | 2 |
| **Vidéophone** | 1 | 3 | 2 | 3 | 2 |
| **Téléphonie** | 1 | 1 | 0 | 0 | 1 |
| **Multimédia** | 2 | 3 | 0 | 3 | 1.5 |
| **Vidéo sur demande** | 1 | 3 | 0 | 3 | 1 |
| **Tableau** | 3 | 2 | 0 | 0 | 2 |
| **Blanc (white board)** | | | | | |
| **Réseau privé virtuel** | | | | | 2 |
| **Données en temps réel** | 3 | 3 | 0 | 2 | 2 |
| **Données interactives** | 3 | 2 | 0 | 0 | 1 |
| **Flux de données** | 3 | 1 | 0 | 0 | 1 |

Les valeurs du tableau indiquent la pondération de chaque paramètre, en allant de 0 pour la pondération ou sensibilité minimale à 3 pour la pondération ou sensibilité maximale.

Il est également possible de regrouper des services dans des catégories de services. Les projets 3GPP et Tequila définissent des catégories de services et des paramètres de paramètres à privilégier pour ces catégories. On propose dans le cadre de l'invention d'associer des catégories de services à des paramètres de réseau. Le tableau suivant présente un exemple de pondération de paramètres réseau associés à différentes catégories.

| Catégories de services | Bande passante | Perte de paquets | Retards | Gigue |
|---|---|---|---|---|
| Utilisation interactive : Telnet, accès à des bases de données, courtes transactions internet, | 1 | 2 | 3 | 1 |
| Xwindow... | | | | |
| Utilisation multimédia interactive : Voix ou vidéo sur IP... | 2 | 2 | 3 | 3 |
| Utilisation multimédia non interactive : Apprentissage à distance, diffusion... | 3 | 2 | 1 | 1 |
| Utilisation orientée requête : Client/serveur... | 2 | 1 | 3 | 1 |
| Utilisation en transfert : FTP, sauvegarde, vente à distance, transactions internet longue durée... | 3 | 1 | 1 | 1 |

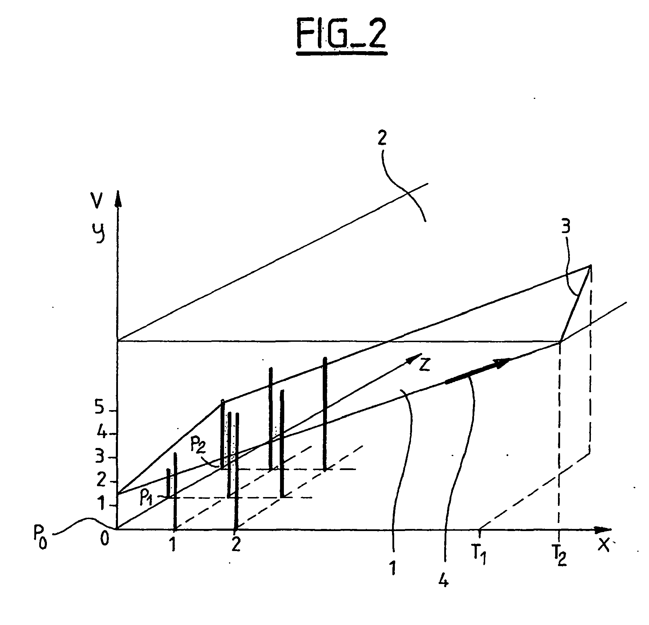

Selon un premier mode de réalisation représenté à la figure 2, un indicateur de niveau de service est défini par une forme géométrique, dans l'exemple par un plan 1. On représente les mesures de paramètres dans l'espace suivant trois axes. On peut par exemple utiliser un axe x représentant le temps, un axe y pour les valeurs des paramètres et un axe z représentant les différents paramètres P0, P1 et P2.

A partir des valeurs des paramètres dans cet espace, on peut définir un plan indicateur 1. Ce plan indicateur peut par exemple être obtenu en effectuant une régression linéaire des valeurs des paramètres P0, P1 et P2, dans un intervalle de temps donné, avant l'instant pour lequel on veut déterminer la tendance. On peut par exemple utiliser les principes des méthodes de filtrage spatio-temporel qui transforment la détection du mouvement dans deux dimensions spatiales en un problème d'estimation de l'orientation d'un plan [Adelson E.H., Bergen J.R., « spatiotemporal energy models for the perception of motion »J. Optical Society of America, vol A2, n2, pp284-299, 1985] et [Laplante P.A., Stoyenko A.D., « real time imaging theory, technique and application, IEEE Press 1996]. Le plan est en lui-même un indicateur de tendance de service.

On peut réaliser diverses transformations sur les paramètres représentés dans l'espace. On peut ainsi appliquer un coefficient multiplicateur à des valeurs d'un paramètre pour que les valeurs des paramètres aient des amplitudes comparables. On peut également réaliser une inversion pour un paramètre dont la tendance est généralement l'inverse de la tendance des autres paramètres. On peut également utiliser des pondérations comme défini précédemment pour établir l'équation du plan indicateur. On peut par exemple utiliser des procédés de régression pondérée avec des poids a priori ou avec des poids fonction des résidus.

On peut également extrapoler un autre indicateur de tendance à partir du plan ainsi défini. On peut par exemple définir un vecteur de tendance 4 ayant comme coordonnées (x, y, 0) inclus dans le plan indicateur. Le vecteur fournit un indicateur simplifié représentatif de la tendance du service. On peut extrapoler un autre indicateur de tendance du plan 1. Cet indicateur de tendance peut par exemple être la pente d'une droite définie par l'intersection d'un plan de référence d'équation Z=0 et du plan indicateur.

Ces indicateurs de tendance sont par exemple utilisés pour définir différentes prévisions d'évolution du service. Il est ainsi possible de prévoir une durée restante jusqu'à un franchissement de seuil, un niveau de service après une durée prédéterminée, une capacité de fourniture de service avant défaillance ou encore une espérance mathématique de perte en fonction de l'accord de service passé.

On peut prévoir la génération d'un signal, visuel ou sonore par exemple, pour avertir du dépassement d'une tendance prédéterminée. Une tendance présentant une pente importante pouvant être synonyme d'une imminente défaillance de la fourniture de service réseau, un tel signal peut permettre de prendre des mesures préventives appropriées. Cette détermination de tendance permet également de déterminer les besoins d'évolution du réseau à court, moyen ou long terme. On peut ainsi modifier la durée des mesures utilisées pour déterminer la tendance en fonction du terme à prévoir.

On va d'abord définir un exemple de prévision de franchissement de seuil de niveau de service. Dans l'exemple de la figure 2 , on peut par exemple définir une surface géométrique de seuil de service, telle qu'un plan 2. On peut ensuite déterminer une courbe 3 à l'intersection entre le plan indicateur 1 et la surface géométrique ou plan de seuil 2. Pour des paramètres représentés avec des valeurs comprises entre 0 et N suivant l'axe z, on peut ensuite déterminer un temps restant à partir de la portion de la courbe intersection dont les valeurs de z sont comprises entre 0 et N. On peut utiliser la valeur moyenne du temps de la portion de courbe ou une de ses valeurs extrêmes pour z compris entre 0 et N. Il est ainsi possible d'utiliser la valeur de temps inférieure T1 de la portion de courbe pour fournir une l'hypothèse la plus défavorable de franchissement de seuil.

Bien qu'on ait décrit un élément géométrique de référence 2 et un élément -géométrique indicateur 1 sous forme de plans, on peut également utiliser toute forme géométrique adéquate pour extrapoler une tendance.

La prévision de tendance de service peut également être utilisée pour calculer une espérance mathématique de perte financière. Un SLA peut prévoir que le prestataire de service réseau doive payer une indemnité à l'utilisateur. On peut alors déterminer une perte à un instant donné en fonction des clauses du contrat de SLA. Il est ainsi possible de prévoir des priorités d'intervention sur le réseau en fonctions d'espérances de pertes calculées pour différents accords de service.

La détermination de tendance peut également permettre de déterminer la capacité de fourniture de service à une date donnée. En effet, si le niveau de service est prévu à un niveau donné à un instant donné, on peut déterminer une capacité de fourniture de service à cet instant. Il est ainsi possible de définir une capacité à passer des accords de niveau de service avant d'atteindre un niveau de service de saturation.

Ces variantes d'utilisation de la détermination de tendance de service peuvent également être utilisées avec d'autres modes de réalisation de la détermination de tendance dont on va maintenant donner quelques exemples.

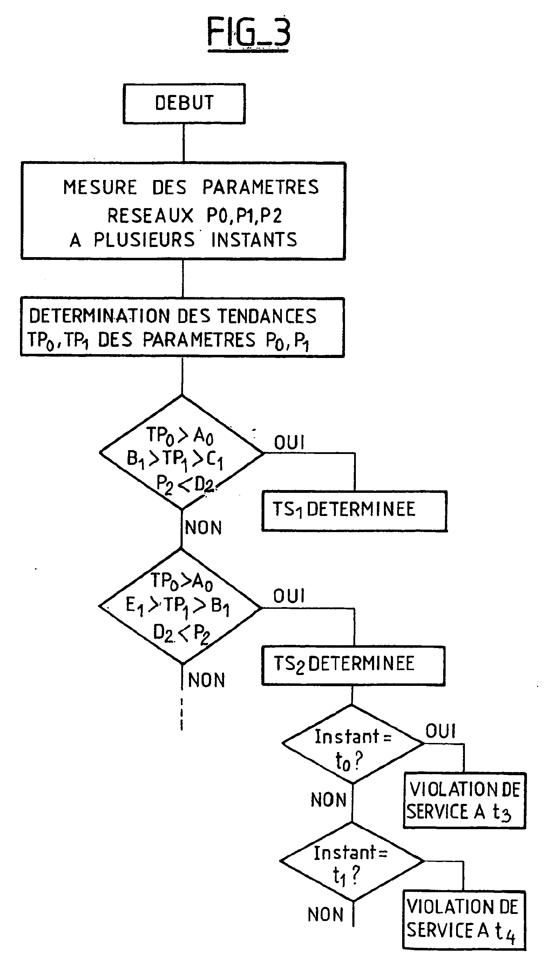

Un second mode de réalisation de la détermination de la tendance du niveau de service, représenté à la figure 3, analyse des cas spécifiques de plusieurs paramètres réseau pour déterminer une tendance. Dans ce mode de réalisation, on compare plusieurs paramètres réseaux à des niveaux logiques de seuil prédéterminés. On peut pour cela appliquer des critères booléens aux valeurs des paramètres. On associe alors une tendance de service prédéterminée à une combinaison de niveaux de paramètres. Ce procédé peut comprendre une étape préliminaire de mesures de paramètres réseau et d'association de ces paramètres à des tendances de service réseau. Ce mode de réalisation est particulièrement approprié pour détecter une tendance en fonction de cas pratiques constatés par un opérateur du réseau. Dans l'exemple de la figure 3, on détermine préalablement les tendances TP0 et TP1 des paramètresP0 et P1. Ces tendances sont utilisées pour déterminer les tendances TS1 ou TS2 du service réseau. On utilise également des valeurs de paramètres réseau pour déterminer la tendance du service réseau. Les tendances déterminées peuvent être utilisées pour les différentes prévisions décrites précédemment. Ainsi, on peut prévoir une étape de prévision de l'instant de violation du service réseau. Pour une tendance de service déterminée, on tient par exemple compte de l'instant où a été calculé la tendance de service pour déterminer l'instant de violation de service.

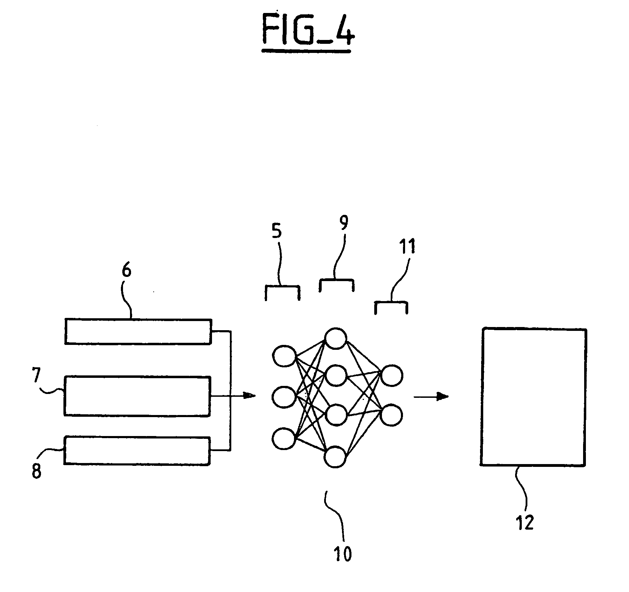

Un autre mode de réalisation est particulièrement adapté pour la détermination de tendance dans des services réseau dont l'évolution des paramètres mesurés ou calculés est non linéaire. Dans cette variante, on utilise un réseau neuronal pour déterminer la tendance du service réseau. La figure 4 représente un exemple de réseau neuronal mis en oeuvre dans le cadre de l'invention. On utilise un réseau neuronal multicouche 10, c'est-à-dire présentant au moins une couche d'entrée 5, une couche cachée intermédiaire 9 et une couche de sortie 11. Pour une couche d'entrée 5 présentant un nombre N de neurones d'entrées, on utilise par exemple une couche cachée 9 présentant 2N+1 neurones et une couche de sortie 11 présentant un nombre de sortie choisi par l'utilisateur.

On applique sur les neurones d'entrée 5 des valeurs de paramètres réseau 6 et/ou des tendances 7 de ces paramètres. On peut également appliquer aux neurones d'entrée 5 des valeurs seuils 8 des paramètres SLS. Les valeurs fournies 6, 7 et 8 en entrée sont ensuite traitées dans la couche cachée 9. La couche de sortie fournit ensuite un certain nombre de signaux définis 12. Les signaux 12 peuvent par exemple indiquer différents franchissements : on peut ainsi prévoir un signal de franchissement d'un seuil de tendance, un signal de franchissement d'un seuil de temps restant avant une violation du service ou tout autre signal approprié pour avertir l'opérateur réseau de l'évolution du service.

La mise en oeuvre du réseau de neurones peut comprendre plusieurs étapes. Dans un premier temps, on forme une base d'apprentissage, fondée par exemple sur des résultats expérimentaux. La base d'apprentissage comprend une multitude d'états des neurones de sortie en fonction des états des neurones d'entrée. Lors d'une étape d'apprentissage, on intègre la base d'apprentissage dans le réseau neuronal. L'étape d'apprentissage consiste à déterminer les poids des connexions neuronales du réseau de neurones grâce à des règles d'apprentissages. . On peut utiliser des règles de rétropropagation du gradient de l'erreur. Ce procédé connu en soi, consiste à pondérer les liens entre les neurones et à corriger ces pondérations de manière récurrente. On compare ainsi le résultat obtenu avec une pondération en cours de test à un résultat fixé préalablement dans la base d'apprentissage. On interrompt le processus récurrent lorsque l'erreur sur les neurones de sortie est inférieure à un seuil prédéterminé. Des logiciels de réseau neuronal sont disponibles par exemple sous la dénomination Stuttgart Neural Network Simulator. On peut également prévoir de réaliser le réseau neuronal sous forme de circuit intégré. L'homme de métier choisira un nombre de couches cachées approprié en fonction de la complexité du service réseau à observer.

L'utilisation d'un réseau de neurones est plus résistante ou robuste à l'erreur ou à l'incertitude sur un ou plusieurs paramètres et permet également d'observer des comportements non linéaires ou cycliques.

Les présents modes de réalisation et exemples doivent être considérés comme ayant été présentés à titre illustratif et non restrictif et l'invention n'est pas censée être limitée aux détails fournis ici mais peut être modifiée en restant dans le cadre de la portée des revendications annexées.

## Revendications

1. Procédé de surveillance d'un service de réseau de communication, comprenant les étapes de :
- sélection d'au moins deux paramètres d'un réseau (P0, P1, P2), représentatifs d'un service réseau et variables dans le temps ;
- mesure et/ou calcul à au moins deux instants des valeurs des paramètres réseau;
- détermination à au moins deux instants de la valeur d'un indicateur de service (1, 4) en fonction desdites valeurs mesurées et/ou calculées des paramètres;
**caractérisé en ce qu'**il comprend en outre une étape de pondération des paramètres réseau en fonction du service à surveiller, l'indicateur de service étant déterminé en fonction desdites valeurs mesurées et/ou calculées des paramètres ainsi pondérés et une étape de détermination d'un indicateur de tendance de l'indicateur de service en fonction desdites valeurs d'indicateur de service ainsi déterminées, ledit indicateur de tendance étant propre à indiquer à un instant choisi l'évolution dans le temps dudit indicateur de service ainsi surveillé.

2. Le procédé de la revendication 1, **caractérisé en ce qu'**il comprend en outre une étape ultérieure de détermination en fonction de l'indicateur de tendance de l'indicateur de service d'un instant de franchissement (T1, T2) par le dit indicateur de service d'un seuil défini (2).

3. Le procédé de la revendication 1, **caractérisé en ce que** le service réseau est choisi dans le groupe constitué de la voix, du vidéophone, de la téléphonie, du multimédia, de la vidéo sur demande, du réseau privé virtuel, des données en temps réel, des données interactives et des flux de données.

4. Le procédé de la revendication 1, **caractérisé en ce qu'**il comprend en outre une étape de détermination d'un plan (1) comme indicateur en effectuant une régression linéaire sur les paramètres réseau mesurés et/ou calculés.

5. Le procédé de la revendication 1, **caractérisé en ce que** la détermination de l'indicateur de tendance de service comprend la comparaison de valeurs des paramètres à des seuils prédéterminés.

6. Le procédé de la revendication 5, **caractérisé en ce que** la détermination de l'indicateur de tendance de service comprend en outre
- la détermination de tendance d'un paramètre réseau ;
- la comparaison de la tendance du paramètre à un seuil prédéterminé.

7. Le procédé de la revendication 1, **caractérisé en ce que** la détermination de l'indicateur de tendance de l'indicateur de service est réalisée par un réseau neuronal (10).

8. Le procédé de la revendication 7, **caractérisé en ce qu'**il comprend en outre une étape d'apprentissage dans laquelle le réseau neuronal détermine des règles d'association entre un indicateur de tendance de service et des valeurs de paramètres de service.

9. Le procédé de la revendication 8, **caractérisé en ce que** l'étape d'apprentissage comprend l'insertion dans le réseau neuronal d'une base d'apprentissage présentant des valeurs d'indicateur de tendance de services associées à des valeurs de paramètres de service.

10. Le procédé de la revendication 9, **caractérisé en ce que** le réseau neuronal est un réseau multi-couches.

11. Le procédé de la revendication 1, **caractérisé en ce qu'**il comprend en outre une étape de calcul d'une espérance mathématique de perte financière en fonction de l'indicateur tendance de service réseau déterminée.

12. Le procédé de la revendication 1, **caractérisé en ce qu'**il comprend en outre une étape de détermination d'une capacité à un instant donné à fournir un service réseau.

13. Un système de gestion de réseau et/ou de services, **caractérisé en ce qu'**il met en oeuvre un procédé selon l'une des revendications précédentes.

## Claims

1. A method for monitoring a communication network service, comprising the steps of:
- selecting at least two parameters of a network (P0, P1, P2) which represent a network service and vary over time
- measuring and/or calculating, at no fewer than two moments, the values of the network parameters;
- determining at no fewer than two moments the value of a service indicator (1, 4) based on said measured and/or calculated values of the parameters
**characterized in that** it further comprises a step of weighting the network parameters based on the service to be monitored, the service indicator being determined as a function of said measured and/or calculated values of the parameters weighted in this way, and a step of determining a trend indicator of the service indicator as a function of said service indicator values determined in this way, said trend indicator being capable of indicating at a chosen moment the change over time of said service indicator monitored in this way.

2. The method of claim 1, **characterized in that** it further comprises a later step of determining, based on the service indicator's trend indicator, a moment (T1, T2) when said service indicator crosses a defined threshold (2).

3. The method of claim 1, **characterized in that** the network service is chosen from a group made up of voice, videophones, telephony, multimedia, video on demand, virtual private networks, real-time data, interactive data, and data streams.

4. The method of claim 1, **characterized in that** it further comprises a step of determining a plane (1) as an indicator by performing a linear regression on the measured and/or calculated network parameters.

5. The method of claim 1, **characterized in that** the determination of the service trend indicator comprises the comparison of the parameters' values to predetermined thresholds.

6. The method of claim 5, **characterized in that** the determination of the service trend indicator further comprises
- determining the trend of a network parameter
- comparing the parameter's trend to a predetermined threshold.

7. The method of claim 1, **characterized in that** the determination of the service indicator's trend indicator, is carried out by a neural network (10).

8. The method of claim 7, **characterized in that** it further comprises a step of learning, within which the neural network determines association rules between a service trend indicator and service parameters values.

9. The method of claim 8, **characterized in that** the learning step comprises the insertion into the neural network of a learning base exhibiting service trend indicator values associated with service parameter values.

10. The method of claim 9, **characterized in that** the neural network is a multi-layer network.

11. The method of claim 1, **characterized in that** it further comprises a step of calculating a mathematical expectation of financial loss as a function of the determined network service trend indicator.

12. The method of claim 1, **characterized in that** it further comprises a step of determining a capability at a given moment to provide a network service.

13. A network and/or services management system, **characterized in that** it implements a method according to one of the preceding claims.

## Patentansprüche

1. Verfahren zur Überwachung eines Kommunikationsnetzwerkdienstes, die folgenden Schritte umfassend:
- Auswählen mindestens zweier Parameter eines Netzwerks (P0, P1, P2), welche für einen Netzwerkdienst repräsentativ und zeitlich veränderlich sind;
- Messen und/oder Berechnen, zu mindestens zwei Zeitpunkten, der Werte der Netzwerkparameter;
- Bestimmen, zu mindestens zwei Zeitpunkten, des Wertes eines Dienstindikators (1, 4) in Abhängigkeit von den besagten gemessenen und/oder berechneten Parameterwerten;
**dadurch gekennzeichnet, dass** es weiterhin einen Schritt des Gewichtens der Netzwerkparameter in Abhängigkeit von dem zu überwachenden Dienst, wobei der Dienstindikator in Abhängigkeit von den besagten gemessenen und/oder berechneten Werten der so gewichteten Parameter bestimmt wird, und einen Schritt des Bestimmens eines Trendindikators des Dienstindikators in Abhängigkeit von den besagten so bestimmten Dienstindikatorwerten umfasst, wobei der besagte Trendindikator dazu geeignet ist, zu einem ausgewählten Zeitpunkt den zeitlichen Verlauf des besagten so überwachten Dienstindikators anzuzeigen.

2. Verfahren nach Anspruch 1, **dadurch gekennzeichnet, dass** es weiterhin einen späteren Schritt des Bestimmens, in Abhängigkeit von dem Trendindikator des Dienstindikators, eines Zeitpunkts des Überschreitens (T1, T2) eines festgesetzten Grenzwerts (2) durch den besagten Dienstindikator umfasst.

3. Verfahren nach Anspruch 1, **dadurch gekennzeichnet, dass** der Netzwerkdienst in der Gruppe bestehend aus: Stimme, Videofon, Telefonie, Multimedia, Abrufvideo, virtuelles privates Netzwerk, Echtzeitdaten, interaktive Daten und Datenströme, gewählt wird.

4. Verfahren nach Anspruch 1, **dadurch gekennzeichnet, dass** es weiterhin einen Schritt des Bestimmens eines Plans (1) als Indikator umfasst, indem eine lineare Regression auf den gemessenen und/oder berechneten Netzwerkparametern vorgenommen wird.

5. Verfahren nach Anspruch 1, **dadurch gekennzeichnet, dass** das Bestimmen des Diensttrendindikators das Vergleichen von Werten der Parameter mit vorgegebenen Grenzwerten umfasst.

6. Verfahren nach Anspruch 5, **dadurch gekennzeichnet, dass** das Bestimmen des Diensttrendindikators weiterhin umfasst:
- Bestimmen des Trends eines Netzwerkparameters;
- Vergleichen des Trends des Parameters mit einem vorgegebenen Grenzwert.

7. Verfahren nach Anspruch 1, **dadurch gekennzeichnet, dass** das Bestimmen des Trendindikators des Dienstindikators von einem neuronalen Netzwerk (10) durchgeführt wird.

8. Verfahren nach Anspruch 7, **dadurch gekennzeichnet, dass** es weiterhin einen Schritt des Lernens umfasst, wobei das neuronale Netzwerk Zuordnungsregeln zwischen einem Diensttrendindikator und Dienstparameterwerten bestimmt.

9. Verfahren nach Anspruch 8, **dadurch gekennzeichnet, dass** der Schritt des Lernens das Einfügen, in das neuronale Netzwerk, einer Lernbasis, welche mit Dienstparameterwerten assoziierte Diensttrendindikatorwerte enthält, umfasst.

10. Verfahren nach Anspruch 9, **dadurch gekennzeichnet, dass** das neuronale Netzwerk ein mehrschichtiges Netzwerk ist.

11. Verfahren nach Anspruch 1, **dadurch gekennzeichnet, dass** es weiterhin einen Schritt des Berechnens eines mathematischen Erwartungswerts eines finanziellen Verlustes in Abhängigkeit von dem Trendindikator des Netzwerkdienstes umfasst.

12. Verfahren nach Anspruch 1, **dadurch gekennzeichnet, dass** es weiterhin einen Schritt des Bestimmens einer Fähigkeit, zu einem gegebenen Zeitpunkt einen Netzwerkdienst bereitzustellen, umfasst.

13. System zur Verwaltung eines Netzwerks und/oder von Diensten, **dadurch gekennzeichnet, dass** es ein Verfahren gemäß einem der vorstehenden Ansprüche durchführt.
